# EUROPEAN PATENT APPLICATION

(11) **EP 2 105 821 A1**
(43) Date of publication of application: **30.09.2009**
(21) Application number: 08102893.8
(22) Date of filing: 25.03.2008
(51) Int. Cl.: G06F 1/26

(54) **Power management method and system for mainboard**

(71) Applicant: Giga-Byte Technology Co., Ltd., Hsin-Tien Taipei County (TW)
(72) Inventor: Lin, Hou-Yuan, Taipei County, Hsin-Tien (TW); Chen, Chen-Shun, Taipei county, Hsin-Tien (TW)
(74) Representative: Cabinet Plasseraud

(57) **Abstract**

A power management method is described, for managing a power on a mainboard, especially an output power of a power management module on the mainboard. The mainboard at least has a microprocessor, and the power management module outputs a power having multiple output phases to the microprocessor. A first load of the microprocessor is detected at a first time, and then a second load of the microprocessor is detected at a second time. When the second load is lower than the first load and also lower than a first predetermined value, the output phase of the power output by the power management module is reduced.

## Description

### BACKGROUND OF THE INVENTION

### Field of Invention

The present invention relates to a power management system, and more particularly to a power management system for a computer mainboard.

### Related Art

The mainboard is a key component in a computer, and is the core of the operation of the computer system. The central processing unit (CPU), CPU fan, chipset, basic input/output system (BIOS), memory, and interface card expansion slot required by the operation of the computer are all mounted on the mainboard.

When the CPU is required to handle a task, data is first stored temporarily in the memory, so if the capacity of the memory is larger, the computer may handle more tasks at the same time at a higher speed. The interface card is a bridge to communicate the host with a peripheral device (for example, the screen). Various interface cards with different functions (such as sound card, network card, and 3D game accelerator card) can be inserted into the mainboard to enhance the performance of the computer. The display card is a necessary interface card for the computer, as no pictures can be seen on the screen in the absence of a display card. Moreover, without the sound card, the songs and sound files in the computer can only be sound by some ineffective sound parts in the host.

All the aforementioned devices need electric power provided by a power supply to operate. The power supply module of the mainboard may be built in the mainboard, or designed into an insert-type. When the power supply module is built in the mainboard, the impedance is the lowest, and there is no need to convert the interface slot, such that the signal can be transmitted quickly and may not be easily attenuated. The advantage of the insert-type is that it is convenient to replace the power supply module when damaged. And currently, the mainboard usually adopts the built-in type.

In order to provide a more stable power for the mainboard when the CPU is at a high frequency and a high load, a multi-phase pulse with modulation (PWM) power supply module is adopted, such that the power is supplied continuously and stably at a high frequency and a high load with no risk. Therefore, along with an increasing demand on the power from the CPU, in order to provide a more stable voltage and current source, the phase of the power provided by the PWM power supply model for supplying the core power to the CPU also increases accordingly.

The phase here is illustrated through a configuration of a single-phase power. The single-phase power mainly includes a PWM, a set of high side and low side metal oxide semiconductor field effect transistors (MOSFETs), an inductance coil (CHOKE), and multiple capacitors. Usually, a single-phase circuit may only provide a limited current amount, and as the processor and the display card require more and more power, a three-phase power has become the most basis design in the mainboard.

The multi-phase power is formed by N single-phase circuits connected in parallel, so as to provide N times current. Generally, the current of each phase is accurately controlled and balanced through a PWM power management chip. When the phase is larger, the output current is closer to DC. The larger the phase of the power supply module of the mainboard, the better, as the total power supply can be shared by each phase. Thereby, the current carried by each pair of MOSFETs at each phase is small, and the calorific value thereof is relatively low, so as to effectively enhance the heat dissipation efficiency of the power supply module of the mainboard. The main function of the high side and low side MOSFETs is to provide a passage for the current by turning on/off. When the current is larger, the MOSFET will become hotter, so a heat sink is usually covered on the MOSFET.

However, the problem is that, the current multi-phase power cannot be adjusted according to the load. That is, no matter the current load of the CPU is, the phase output by the PWM power management chip is fixed.

### SUMMARY OF THE INVENTION

Accordingly, the present invention is directed to a power management method for a mainboard, which adjusts the output phase of power according to the actual load, so as to reduce the total power consumption of the system.

A power management method according to an embodiment of the present invention is provided to manage a power on a mainboard, especially an output power of a power management module on the mainboard. The mainboard at least has a microprocessor, and the power management module outputs a power having multiple output phases to the microprocessor. A first load of the microprocessor is detected at a first time, and then a second load of the microprocessor is detected at a second time. When the second load is lower than the first load and also lower than a first predetermined value, the output phase of the power output by the power management module is reduced.

The power management method provided by the present invention may be used to detect the current load of the system, so as to adjust the phase of the power required by the system, and shut down the unused devices to further save energy.

The power management method provided by the present invention may be used to detect in real time hardware devices and software monitoring that share the load of the system. The method may also be applied to an existing mainboard device, and perform software monitoring and implement hardware control circuits, so as to make the voltages and operating frequencies of devices, such as the CPU, memory, and PCI_EXPRESS display card, change in sync with the load used by the system. Further, the power management method provided by the present invention may be used to automatically adjust the frequency and voltage. That is, a maximum output phase of the power is adopted at a high load, and the voltage and frequency are lowered at a low load, so as to reduce the power consumption and save energy. In addition, the power management method provided by the present invention is used for real-time detection. Therefore, whenever a user intends to handle a task at a high load, the voltage and frequency will be increased in a short time, and thus the user may not perceive any obvious change of the system efficiency. That is, if the user intends to handle a task at a low load, the voltage and frequency will also be reduced in a short time.

### BRIEF DESCRIPTION OF THE DRAWINGS

The present invention will become more fully understood from the detailed description given herein below for illustration only, and thus are not limitative of the present invention, and wherein:
FIG. 1 is a schematic view of a mainboard; and
FIG. 2 is a flow chart of a power management method according to an embodiment of the present invention.

### DETAILED DESCRIPTION OF THE INVENTION

The detailed features and advantages of the present invention will be described in detail in the following embodiments. Those skilled in the arts can easily understand and implement the content of the present invention. Furthermore, the relative objectives and advantages of the present invention are apparent to those skilled in the arts with reference to the content disclosed in the specification, claims, and drawings. The embodiments below are only used to illustrate the features of the present invention, instead of limiting the scope of the same.

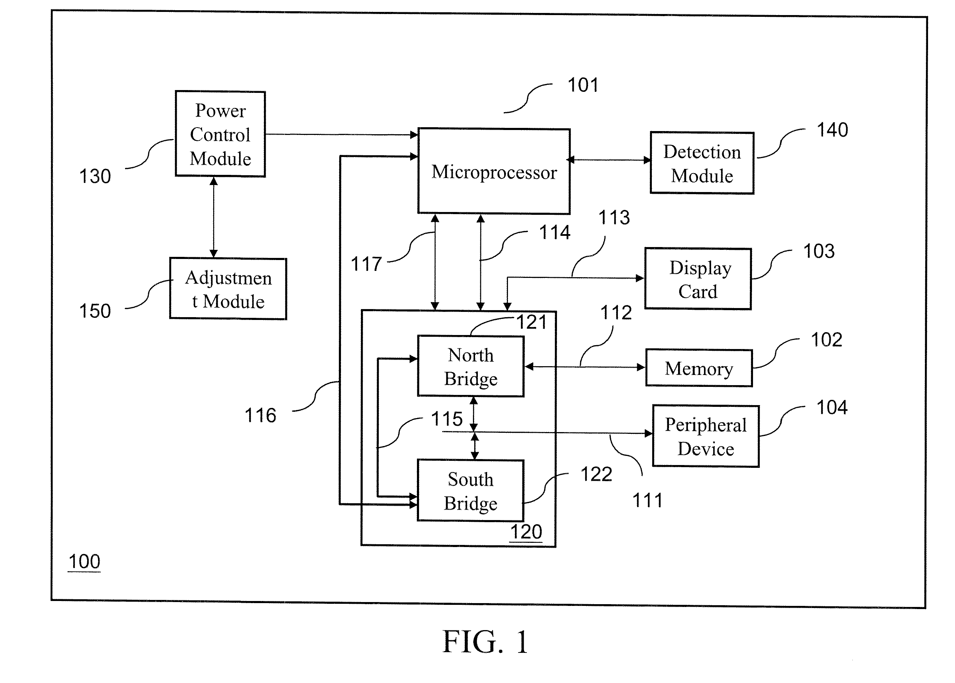

FIG. 1 is a schematic view of a common mainboard 100.

A microprocessor 101, generally mounted on the mainboard 100, is the operation center of a computer. Most of the tasks, interrupts, or events are operated or processed by the microprocessor 101. The mainboard 100 includes a microprocessor slot (not shown) for inserting the microprocessor 101, a BIOS (not shown), a memory slot (not shown) for inserting a memory 102, a peripheral component interconnect (PCI) bus 111, a memory bus 112, a PCI_EXPRESS bus 113, and other expansion slots and buses. The above buses are examples for illustration only, instead of limiting the mainboard system applying the present invention. Of course, the buses may also include an accelerated graphics port (AGP) bus or those already known but not mentioned herein.

In order to control all the peripheral components on the mainboard 100, a system control chipset 120 is mounted on the mainboard 100. The system control chipset 120 may be designed to have different functions according to the architecture of the mainboard. In a common mainboard, the system control chipset 120 includes a north bridge 121 and a south bridge 122. The north bridge 121 is in charge of the signal transmission and communication between the memory and a display card 103 of the PCI_EXPRESS bus interface, and between the memory 102 and the microprocessor 101. The south bridge 122 is in charge of the communication between the microprocessor 101 and the devices such as PCI periphery, hard disc, software, mouse, and keyboard.

The microprocessor 101 communicates with the north bridge 121 through a system bus 114. The signal communication and control instruction transmission between the south bridge 122 and the microprocessor 101, between the north bridge 121 and the microprocessor 101, and between the north bridge 121 and the microprocessor 101 are accomplished through signal lines 115, 116, and 117.

The current microprocessor 101 has an increasingly higher operating frequency, and thus a power control module 130 may be further mounted on the mainboard 100, for providing a multi-phase voltage output and frequency adjustment. The power control module 130 provides a multi-phase power to the microprocessor 101, such that the microprocessor 101 may be stably operated at a high frequency. The current power control module 130 may output a four-phase, a six-phase, or an eight-phase power, and some high level devices may even output a twelve-phase power.

The power control module 130 may be accomplished by a circuit or by some business integrated circuit at present, such as the integrated circuit MOD: ISL6327 sold by Intersil company.

Presently, though the power control module 130 may provide a multi-phase power output, the phase of the power cannot be adjusted according to the current load of the system. That is, assuming that the power control module 130 provides a six-phase power, no matter the current microprocessor 101 is at a high or low load, the power control module 130 outputs a six-phase power. Therefore, if the output phase of the power control module 130 is reduced at a low load, the power consumption may be reduced to save energy.

Thereby, a detection module 140 is further mounted on the mainboard, for detecting a first load of the microprocessor at a first time, and detecting a second load of the microprocessor at a second time. When the second load is lower than the first load and also lower than a first predetermined value, the output phase of the power output by the power management module is reduced through an adjustment module 150. In an embodiment, the detection module 140 is accomplished by an independent circuit, or is disposed in the microprocessor and accomplished by the firmware. In an embodiment, the adjustment module 150 is accomplished by an independent circuit, or is used in combination with the firmware and software.

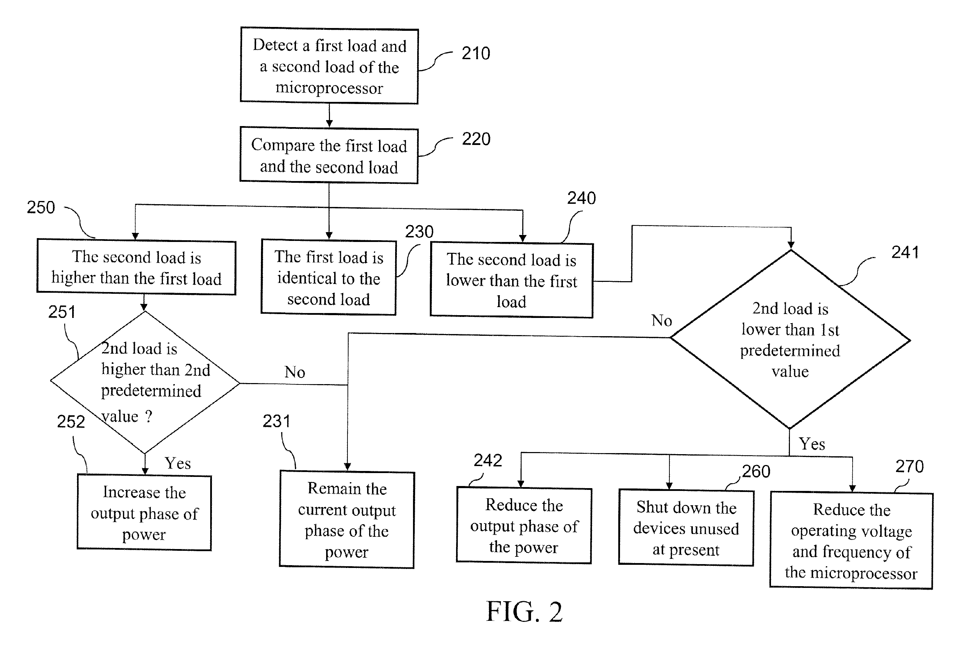

FIG. 2 is a flow chart of a power management method for a mainboard according to the present invention, in which the method can assist dynamic adjustment of a power supply. According to the method, the power management is performed through computer software programs by a microprocessor or by a power management module. Any hardware capable of adjusting the output phase of the power control module 130 may execute the computer software programs in the present invention by means of terminate and stay resident (TSR) or other manners, so as to adjust the phase of the output power.

When the north bridge 121, the south bridge 122, the display card 103, the memory 102, and other peripheral devices 104 are in operation, the microprocessor 101 is at a high load state. In practice, the load of the microprocessor 101 may be divided into several stages, and each stage is corresponding to a particular phase output. Assuming that a full load is 100%, the load is selectively divided into five stages, including a first-stage load of 20%, a second-stage load of 40%, a third-stage load of 60 %, a fourth-stage load of 80%, and a fifth-stage load of 100%. Taking the six-phase power output for example, a two-phase power output is adopted at the first-stage load, a three-phase power output at the second-stage load, a four-phase power output at the third-stage load, a five-phase power output at the fourth-stage load, and a six-phase power output at the fifth-stage load.

Further, the division of the load may be determined by the output phase of the power control module 130. In another embodiment, the load is divided into three stages, including a first-stage load of 33%, a second-stage load of 66%, and a third-stage load of 100%. Taking the three-phase power output for example, a single-phase power output is adopted at the first-stage load, a two-phase power output at the second-stage load, and a three-phase power output at the third-stage load.

When the system turns on, a first load is detected by the microprocessor 101 at a first time (Step 210), and is recorded. Then, a second load is detected by the microprocessor 101 at a second time, and is also recorded. The interval between the first and the second time may be dynamically adjusted according to the actual circumstance. In order to adjust the power output in real time, the interval between the first and the second time may not be too long.

Afterward, the first load and the second load are compared (Step 220), so as to determine whether the load of the microprocessor changes or not. When the second load detected at the second time is identical to the first load detected at the first time (Step 230), the current load of the system remains unchanged, and thereby the power management module 130 continues to output power to the microprocessor at the current output phase (Step 231).

If the second load is lower than the first load (Step 240), but not lower than a first predetermined value, such as the aforementioned third-stage load or the second-stage load, the power management module 130 also continues to output power at the current output phase (Step 231). If the second load is lower than the first predetermined value (Step 241), the power management module 130 decreases the output phase (Step 242), and outputs the power at a lower phase to the microprocessor.

If the second load is higher than the first load (Step 250) but still lower than a predetermined value (Step 251), such as the aforementioned second-stage load or third-stage load, the power management module 130 also continues to output at the current output phase (Step 231). If the second load is higher than a predetermined value (Step 251), the power management module 130 increases the output phase (Step 252), and outputs the power at a higher phase to the microprocessor.

Besides changing the phase of the output power, in another embodiment, the operating frequency of the power management module may be lowered, so as to reduce the power consumption of the output power.

In the present invention, the power management module 130 may adjust the output phase of the power according to the current load of the microprocessor, and meanwhile shut down the devices unused according to the load (Step 260). During the detection of the load of the microprocessor, the devices out of operation are also detected. For example, if the south bridge 122 is not in operation at present, when the second load is lower than a predetermined value, a GPIO PIN switching circuit is provided based on the currently designed power circuit to reduce the power supply, such that the power output to the south bridge 122 is also decreased, and the normal voltage supply can be recovered at once on demand. If a GSATA and an LAN chip are externally connected, independent power supply circuits thereof may be added into the GPIO control circuit. Thereby, when no current usage is detected, the GPIO control circuit immediately sends an OFF signal to shut down the power temporarily, and when an reading operation is needed, the GPIO control circuit again immediately sends an ON signal to recover the power for being used.

In an embodiment, when the system is in operation and at a low load, the GPIO PIN switching circuit may be employed to reduce the power supply, so as to decrease the power output to shut down the unnecessary devices, such as the memory, north bridge chipset, graphics card, and display card, and also immediately recover the normal voltage supply on demand.

In another embodiment, if the second load is lower than the first load and also lower than a predetermined value (Step 241), the power management module 130 may reduce the output phase (Step 242), and also lower the operating voltage and frequency of the microprocessor (Step 270). According to the present invention, the operating voltages and frequencies of the devices, such as the memory, south bridge chipset, north bridge chipset, graphics card, and display card, may also be reduced.

According to the method disclosed in the present invention, by detecting the load of the microprocessor, the power management module adjusts the output phase of the power according to the load of the microprocessor. Moreover, as the system detects the load continuously in real time, the output phase of the power is adjusted according to the actual load in real time, and will be adjusted immediately when there is any change in the load. Thereby, the total power consumption of the system is reduced to save energy.

## Claims

1. A power management method for a mainboard, wherein the mainboard at least has a microprocessor and a power management module, and the power management module outputs a power having multiple output phases to the microprocessor, the method comprising:
detecting a first load of the microprocessor at a first time;
detecting a second load of the microprocessor at a second time; and
when the second load is lower than the first load and also lower than a first predetermined value, reducing the output phase of the power output by the power management module.

2. The power management method for a mainboard as claimed in claim 1, wherein when the second load is lower than the first load but higher than the first predetermined value, the power output by the power management module remains at the current output phase.

3. The power management method for a mainboard as claimed in claim 1, wherein when the second load is identical to the first load, the power output by the power management module remains at the current output phase.

4. The power management method for a mainboard as claimed in claim 1, further comprising: when the second load is higher than the first load and also higher than a second predetermined value, increasing the output phase of the power output by the power management module.

5. The power management method for a mainboard as claimed in claim 1, wherein when the second load is higher than the first load but lower than the second predetermined value, the power output by the power management module remains at the current output phase.

6. The power management method for a mainboard as claimed in claim 1, further comprising: when the second load is lower than the first load and also lower than the first predetermined value, reducing an operating voltage and an operating frequency of the microprocessor.

7. A power management system for a mainboard, comprising:
a microprocessor;
a power management module, for outputting a power having multiple output phases to the microprocessor;
a detection module, for detecting a first load of the microprocessor at a first time, and detecting a second load of the microprocessor at a second time; and
an adjustment module, for reducing the output phase of the power output by the power management module when the second load is lower than the first load and also lower than a first predetermined value.

8. The power management system as claimed in claim 1, wherein when the second load is lower than the first load but higher than the first predetermined value, the adjustment module makes the power output by the power management module remain at the current output phase.

9. The power management system as claimed in claim 1, wherein when the second load is identical to the first load, the adjustment module makes the power output by the power management module remain at the current output phase.

10. The power management system as claimed in claim 1, wherein when the second load is higher than the first load and also higher than a second predetermined value, the adjustment module increases the output phase of the power output by the power management module.

11. The power management system as claimed in claim 1, wherein when the second load is higher than the first load but lower than the second predetermined value, the adjustment module makes the power output by the power management module remain at the current output phase.

## Amended claims

### Amended claims in accordance with Rule 137(2) EPC.

**1.** A power management method for a mainboard, wherein the mainboard at least has a microprocessor and a power management module, and the power management module outputs a power having multiple output phases to the microprocessor, the method comprising:
detecting (210) a first load of the microprocessor at a first time;
detecting (210) a second load of the microprocessor at a second time; and
when the second load is lower than the first load (240) and also lower than a first predetermined value (241), reducing (242) the output phase of the power output by the power management module.

**2.** The power management method for a mainboard as claimed in claim 1, wherein when the second load is lower than the first load but higher than the first predetermined value, the power output by the power management module remains (231) at the current output phase.

**3.** The power management method for a mainboard as claimed in claim 1, wherein when the second load is identical to the first load, the power output by the power management module remains at the current output phase.

**4.** The power management method for a mainboard as claimed in claim 1, further comprising: when the second load is higher (250) than the first load and also higher (251) than a second predetermined value, increasing (252) the output phase of the power output by the power management module.

**5.** The power management method for a mainboard as claimed in claim 1, wherein when the second load is higher (250) than the first load but lower (251) than the second predetermined value, the power output by the power management module remains (231) at the current output phase.

**6.** The power management method for a mainboard as claimed in claim 1, further comprising: when the second load is lower (240) than the first load and also lower (241) than the first predetermined value, reducing (270) an operating voltage and an operating frequency of the microprocessor.

**7.** A power management system for a mainboard, comprising:
a microprocessor (101);
a power management module (130), for outputting a power having multiple output phases to the microprocessor;
a detection module (140), for detecting a first load of the microprocessor at a first time, and detecting a second load of the microprocessor at a second time; and
an adjustment module (150), for reducing the output phase of the power output by the power management module when the second load is lower than the first load and also lower than a first predetermined value.

**8.** The power management system as claimed in claim 7, wherein when the second load is lower than the first load but higher than the first predetermined value, the adjustment module makes the power output by the power management module remain at the current output phase.

**9.** The power management system as claimed in claim 7, wherein when the second load is identical to the first load, the adjustment module makes the power output by the power management module remain at the current output phase.

**10.** The power management system as claimed in claim 7, wherein when the second load is higher than the first load and also higher than a second predetermined value, the adjustment module increases the output phase of the power output by the power management module.

**11.** The power management system as claimed in claim 7, wherein when the second load is higher than the first load but lower than the second predetermined value, the adjustment module makes the power output by the power management module remain at the current output phase.
